# EUROPEAN PATENT APPLICATION

(11) **EP 4 358 389 A1**
(43) Date of publication of application: **24.04.2024**
(21) Application number: 22824655.9
(22) Date of filing: 01.04.2022
(51) Int. Cl.: H02M 7/48, H02M 7/493

(54) **POWER CONVERSION DEVICE AND POWER CONVERSION METHOD**

(30) Priority: 16.06.2021 JP 2021099908
(71) Applicant: Hitachi, Ltd., Tokyo 100-8280 (JP)
(72) Inventor: SHIMADA, Takae, Tokyo 100-8280 (JP); ENDO, Shun, Tokyo 100-8280 (JP); ANDO, Masato, Tokyo 100-8280 (JP); TAKAYAMA, Naoki, Tokyo 101-8941 (JP); SEKI, Masaki, Tokyo 101-8941 (JP); HOTATE, Hisashi, Tokyo 101-8941 (JP)
(74) Representative: MERH-IP Matias Erny Reichl Hoffmann Patentanwälte PartG mbB
(86) International application number: PCT/JP2022/016983
(87) International publication number: WO 2022/264660

(57) **Abstract**

A power conversion device according to an aspect of the present invention includes: a plurality of power conversion units connected in parallel via an inductance component; and a control unit that changes turn-on and turn-off timings of switching elements included in each of the plurality of power conversion units to control an output, in which the control unit alternately and repeatedly delays the turn-on timing of the switching elements included in the first power conversion unit and the turn-on timing of the switching elements included in the second power conversion unit.

## Description

### Technical Field

The present invention relates to a power conversion device and a power conversion method for converting power between input and output.

### Background Art

In order to reduce the amount of energy used in the world, a power conversion device using a semiconductor switching element, such as an inverter that drives a motor, a converter that supplies power to the inverter, and a charge/discharge device of an electric vehicle, is required to have high efficiency. In these power conversion devices, a plurality of power conversion units including switching elements may be connected in parallel.

In order to improve the efficiency of the power conversion device, it is necessary to reduce energy lost in the switching element. The loss in the switching element includes a conduction loss generated by a current flowing through the switching element and a switching loss generated when the switching element is switched between an on state and an off state.

PTL 1 discloses a control device capable of reducing a switching loss in a case where a power conversion device is configured using a parallel connection body of a pair of switching elements. PTL 1 describes that a control device "generates delay time in switching operation of first switching element and second switching element so that when a drive voltage of one switching element becomes a mirror voltage, on-operation or off-operation of the other switching element is started, and the other switching element is turned on or off". As a result, since the switching operation of the other switching element is performed in the energized state at the mirror voltage of the one switching element, it is possible to suppress the occurrence of the switching loss due to the on-operation or the off-operation of the other switching element.

### Citation List

### Patent Literature

PTL 1: JP 2019-24312 A

### Summary of Invention

### Technical Problem

The technique disclosed in PTL 1 described above is a technique applied to a case where switching elements are connected in parallel. However, even when this technique is used, the total current switched by the switching elements connected in parallel cannot be reduced, so that the effect of reducing the switching loss may be insufficient. Further, PTL 1 does not mention reduction of a switching loss in a power conversion device including a plurality of power conversion units connected in parallel.

In view of the above circumstances, there has been a demand for a power conversion method for reducing a switching loss in a power conversion device including a plurality of power conversion units connected in parallel.

### Solution to Problem

In order to solve the above problem, a power conversion device according to an aspect of the present invention includes: a plurality of power conversion units connected in parallel via an inductance component; and a control unit that changes turn-on and turn-off timings of switching elements included in each of the plurality of power conversion units to control an output, in which the control unit alternately and repeatedly delays a turn-on timing of a switching element included in a first power conversion unit and a turn-on timing of a switching element included in a second power conversion unit.

### Advantageous Effects of Invention

According to the power conversion device of at least one aspect of the present invention, switching loss can be reduced and high efficiency can be obtained in the power conversion device including the plurality of power conversion units connected in parallel.

The problems, configurations, and effects other than those described above will be clarified from the description of the embodiments below.

### Brief Description of Drawings

[FIG. 1] FIG. 1 is a circuit configuration diagram illustrating an example of a power conversion device according to a first embodiment of the present invention.
[FIG. 2] FIG. 2 is a waveform chart illustrating an operation example of the power conversion device according to the first embodiment of the present invention.
[FIG. 3] FIG. 3 is a circuit diagram illustrating an operation example (modes A1 to A4) of the power conversion device according to the first embodiment of the present invention.
[FIG. 4] FIG. 4 is a circuit diagram illustrating an operation example (modes A5 to A8) of the power conversion device according to the first embodiment of the present invention.
[FIG. 5] FIG. 5 is a circuit diagram illustrating an operation example (modes A9 to A12) of the power conversion device according to the first embodiment of the present invention.
[FIG. 6] FIG. 6 is a waveform chart illustrating another operation example of the power conversion device according to the first embodiment of the present invention.
[FIG. 7] FIG. 7 is a circuit diagram illustrating another operation example (modes B1 to B3n) of the power conversion device according to the first embodiment of the present invention.
[FIG. 8] FIG. 8 is a circuit diagram illustrating another operation example (modes B4 to B7) of the power conversion device according to the first embodiment of the present invention.
[FIG. 9] FIG. 9 is a circuit diagram illustrating another operation example (modes B8 to B10) of the power conversion device according to the first embodiment of the present invention.
[FIG. 10] FIG. 10 is a circuit diagram illustrating another operation example (modes B11 to B12) of the power conversion device according to the first embodiment of the present invention.
[FIG. 11] FIG. 11 is a diagram illustrating how a switching loss and a conduction loss change when a delay time of a switching element according to the first embodiment of the present invention is changed.
[FIG. 12] FIG. 12 is a diagram illustrating how the delay time is changed with respect to a change in current flowing through an inductor according to the first embodiment of the present invention.
[FIG. 13] FIG. 13 is a circuit configuration diagram illustrating an example of a power conversion unit according to a second embodiment of the present invention.
[FIG. 14] FIG. 14 is a circuit configuration diagram illustrating an example of a power conversion unit according to a third embodiment of the present invention.
[FIG. 15] FIG. 15 is a circuit configuration diagram illustrating an example of a power conversion unit according to a fourth embodiment of the present invention.

### Description of Embodiments

Hereinafter, examples of modes for carrying out the present invention will be described with reference to the accompanying drawings. In the present specification and the accompanying drawings, components having substantially the same function or configuration are designated by the same reference numerals, and duplicate description will be omitted.

### <First embodiment>

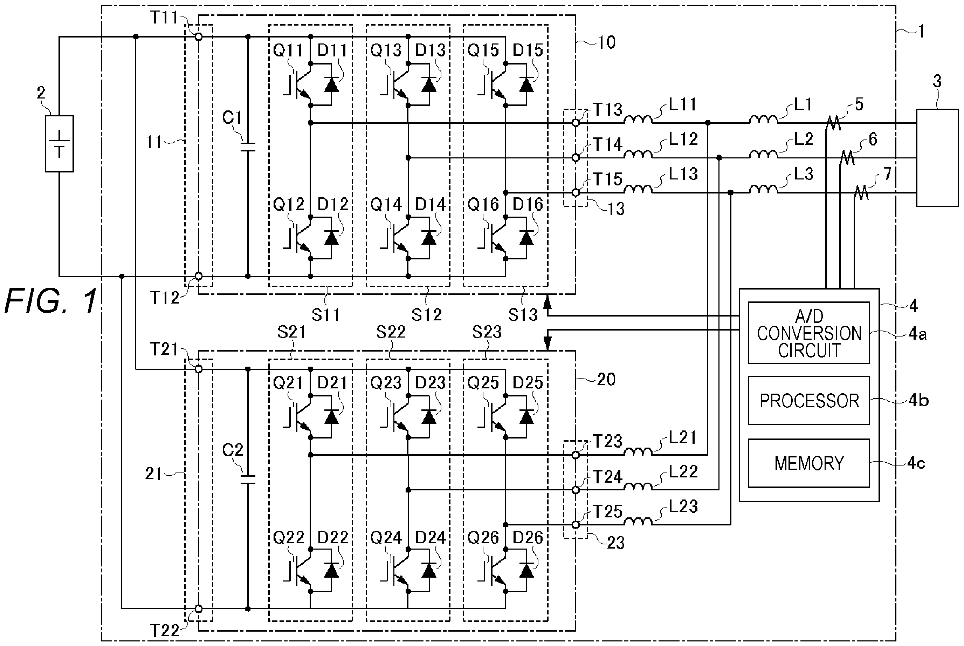

First, a power conversion device according to a first embodiment of the present invention will be described with reference to FIGS. 1 to 4.

### [Circuit Configuration of Power Conversion Device]

FIG. 1 is a circuit configuration diagram of a power conversion device according to the first embodiment of the present invention. An illustrated power conversion device 1 is connected between a DC power supply 2 and a load 3 (for example, a motor), receives power from the DC power supply 2, and supplies DC and AC power to the load 3. It is also possible to input power from the load 3 and regenerate the power to the DC power supply 2.

The power conversion device 1 includes a power conversion unit 10, a power conversion unit 20, inductors L11 to L13, L21 to L23, and L1 to L3, current sensors 5 to 7 that detect load currents, and a control unit 4 that controls on/off of switching elements included in the power conversion units 10 and 20 to control the load currents.

The power conversion unit 10 includes a capacitor C1, a switching leg S11 (example of a first switching leg), a switching leg S12 (example of a second switching leg), a switching leg S13 (example of a third switching leg) and terminals T11 to T15. The switching leg S11 includes a switching element Q11 and a switching element Q12 connected in series. The switching leg S12 includes a switching element Q13 and a switching element Q14 connected in series. The switching leg S13 includes a switching element Q15 and a switching element Q16 connected in series. The capacitor C1, the switching leg S11, the switching leg S12, and the switching leg S13 are connected in parallel. The switching elements constituting the power conversion units 10 and 20 are, for example, insulated gate bipolar transistors (IGBT), metal oxide semiconductors (MOSFET), or the like.

One end of the capacitor C1 is connected to the terminal T11, and the other end of the capacitor C1 is connected to the terminal T12. The terminal T11 is connected to one electrode of the DC power supply 2, and the terminal T12 is connected to the other electrode of the DC power supply 2. In addition, a terminal T13 is connected to a connection point between the switching element Q11 and the switching element Q12, a terminal T14 is connected to a connection point between the switching element Q13 and the switching element Q14, and a terminal T15 is connected to a connection point between the switching element Q15 and the switching element Q16. The terminals T11 and T12 are set as the input/output terminal 11, and the terminals T13 to T15 are set as the input/output terminal 13. Diodes D11 to D16 are connected in anti-parallel to the switching elements Q11 to Q16, respectively.

The power conversion unit 20 includes a capacitor C2, a switching leg S21 (example of a first switching leg), a switching leg S22 (example of a second switching leg), a switching leg S23 (example of a third switching leg) and terminals T21 to T25. The switching leg S21 includes a switching element Q21 and a switching element Q22 connected in series. The switching leg S22 includes a switching element Q23 and a switching element Q24 connected in series. The switching leg S23 includes a switching element Q25 and a switching element Q26 connected in series. The capacitor C2, the switching leg S21, the switching leg S22, and the switching leg S23 are connected in parallel.

One end of the capacitor C2 is connected to the terminal T21, and the other end of the capacitor C2 is connected to the terminal T22. In addition, the terminal T23 is connected to a connection point between the switching element Q21 and the switching element Q22, the terminal T24 is connected to a connection point between the switching element Q23 and the switching element Q24, and the terminal T25 is connected to a connection point between the switching element Q25 and the switching element Q26. The terminals T21 and T22 are set as an input/output terminal 21, and the terminals T23 to T25 are set as an input/output terminal 23. Diodes D21 to D26 are connected in anti-parallel to the switching elements Q21 to Q26, respectively.

The power conversion unit 10 and the power conversion unit 20 are connected in parallel. Specifically, the input/output terminal 11 (T11, T12) of the power conversion unit 10 and the input/output terminal 21 (T21, T22) of the power conversion unit 20 are connected. In addition, the input/output terminal 13 (T13 to T15) of the power conversion unit 10 and the input/output terminal 23 (T23 to T25) of the power conversion unit 20 are connected via the inductors L11 to L13 and the inductors L21 to L23 for respective phases.

As illustrated in FIG. 1, the load 3 sides of the power conversion unit 10 and the power conversion unit 20 are connected in parallel via inductors (inductors L11 to L13, L21 to L23) as main components of inductance components. When the inductances of the inductors L11 to L13 and L21 to L23 are substituted by the inductance of the wiring connecting the power conversion unit 10 and the power conversion unit 20, the inductors L11 to L13 and L21 to L23 may be omitted.

One end of the inductor L1 is connected to a connection point between the inductor L11 and the inductor L21, one end of the inductor L2 is connected to a connection point between the inductor L12 and the inductor L22, one end of the inductor L3 is connected to a connection point between the inductor L13 and the inductor L23, and currents of the inductors L1 to L3 are supplied to the load 3. Note that the inductors L1 to L3 may be omitted in a case where the load 3 has a sufficient inductance such as a motor or a characteristic that can be regarded as a current source.

The control unit 4 controls on/off of the switching elements Q11 to Q16 and Q21 to Q26, and controls the load currents detected by the current sensors 5 to 7. Then, the control unit 4 controls on/off of the switching elements Q11 to Q16 and Q21 to Q26 based on the load currents detected using the current sensors 5 to 7. The power conversion unit 10, 20 includes a drive circuit (not illustrated) that supplies a gate signal for each of the switching elements Q11 to Q16. The control unit 4 outputs a drive command to a corresponding drive circuit for each of the switching elements Q11 to Q16 to control switching operation (on/off) of the switching elements Q11 to Q16.

The control unit 4 is a controller including, for example, a microcomputer. The control unit 4 includes an analog/digital (A/D) conversion circuit 4a that converts the current of each phase detected by the current sensor 5 to 7 into a digital signal, a processor 4b, a memory 4c, and the like. The processor 4b is, for example, a processing device such as a central processing unit (CPU). As the processing device, a micro-processing unit (MPU) may be used instead of the CPU. The memory 4c is a storage device such as a semiconductor memory in which a program code (control program) of software for implementing each function according to the present embodiment is stored. The control unit 4 includes a network interface (not illustrated), and receives a target value of the load current from, for example, an electronic control unit (ECU) of a control target system. The processor 4b reads and executes the control program from the memory 4c, and outputs a drive command to the drive circuit corresponding to each of the switching elements Q11 to Q16 based on the current detection value of the current sensor 5 to 7 input from the A/D conversion circuit 4a and the target value.

### [Operation Example of Power Conversion Device]

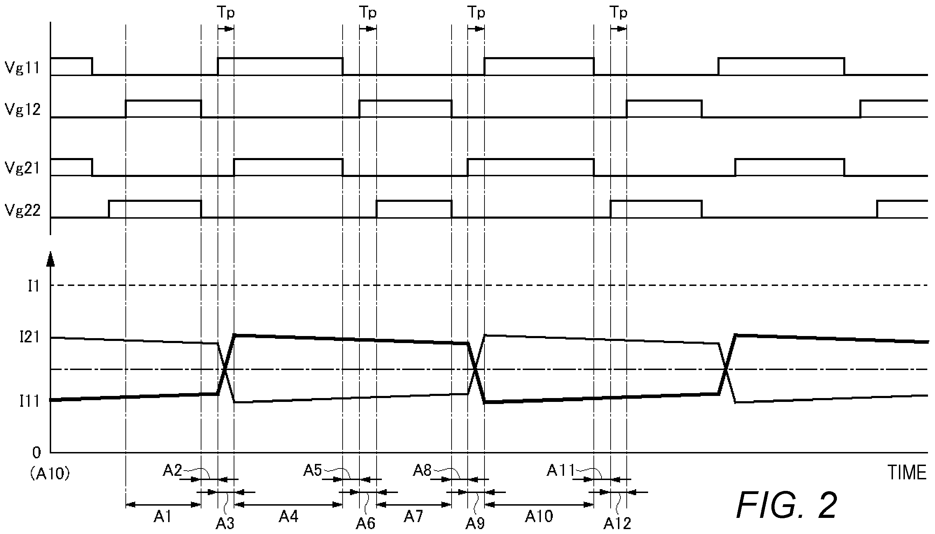

Next, the operation of the power conversion device 1 will be described with reference to FIGS. 2 and 3 to 5.

FIG. 2 is a waveform chart illustrating an operation example of the power conversion device 1.

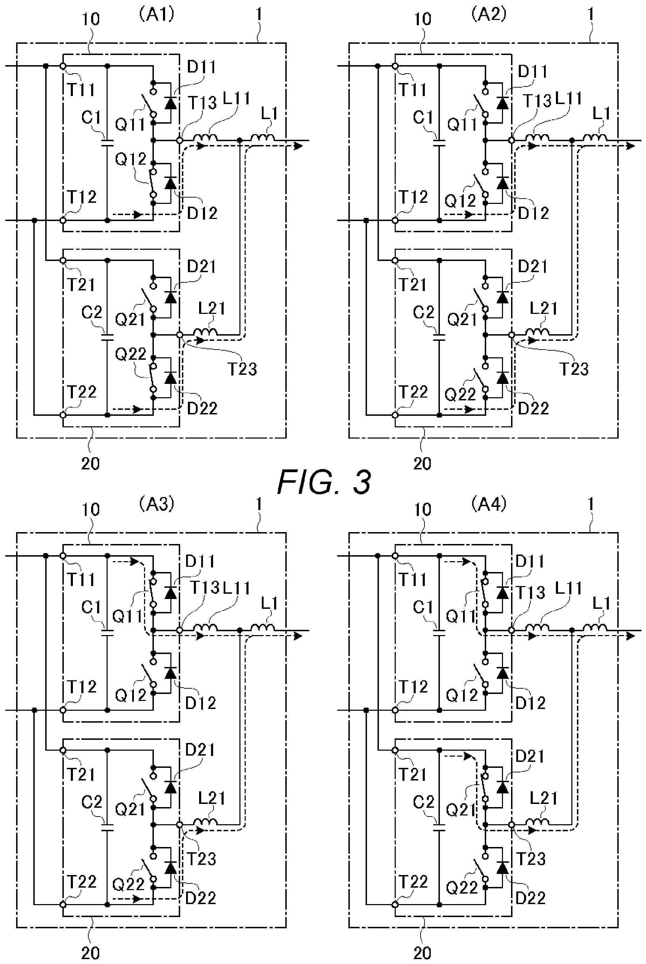

FIG. 3 is a circuit diagram illustrating an operation example (modes A1 to A4) of the power conversion device 1.

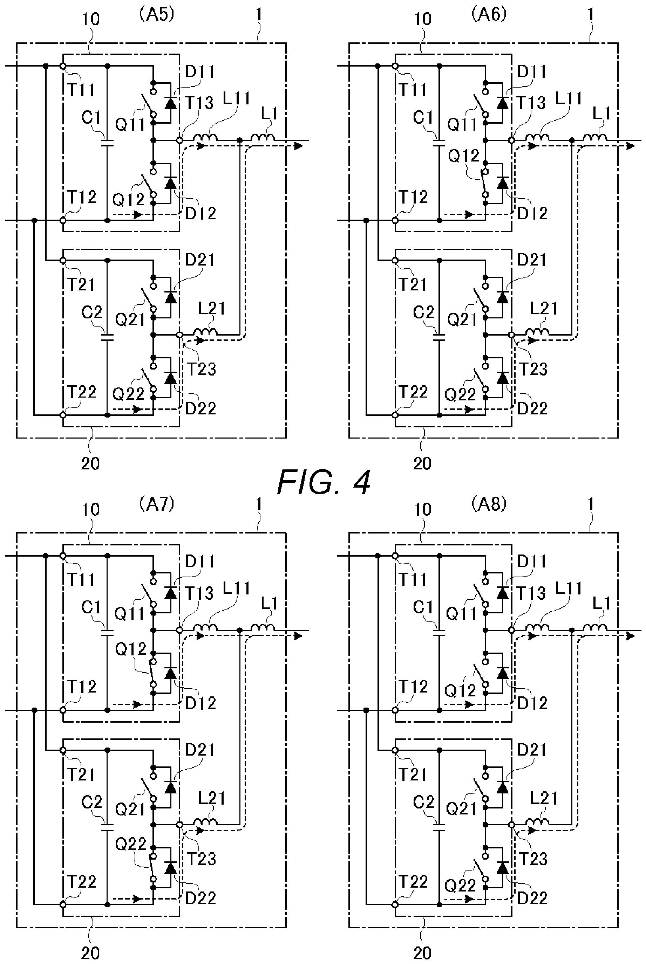

FIG. 4 is a circuit diagram illustrating an operation example (modes A5 to A8) of the power conversion device 1.

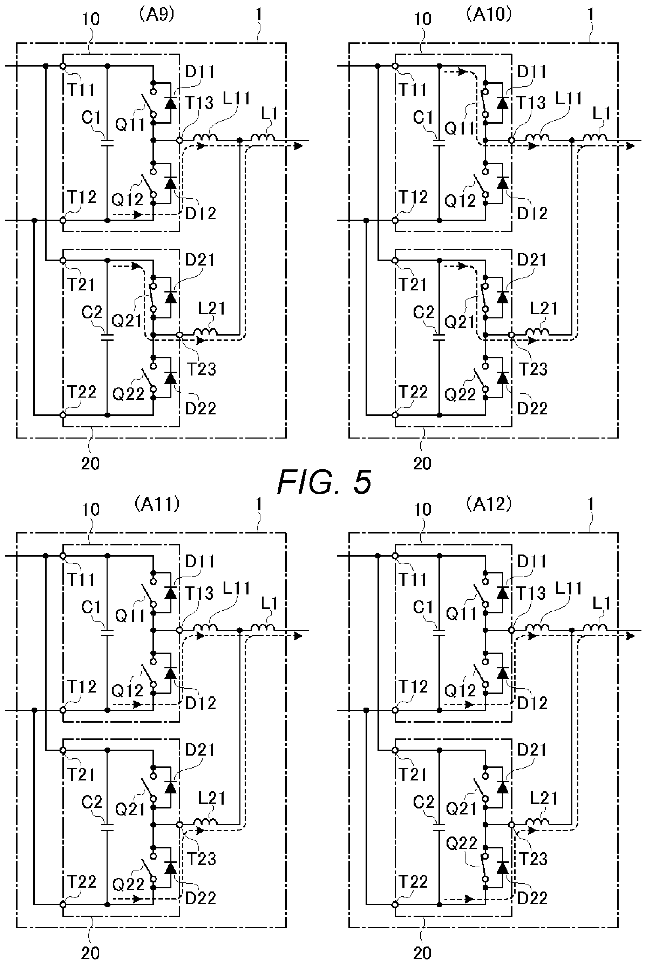

FIG. 5 is a circuit diagram illustrating an operation example (modes A9 to A12) of the power conversion device 1.

In FIG. 2, the horizontal axis represents time, and the vertical axis represents the voltage or current state of each unit of the power conversion device 1. Vg11, Vg12, Vg21, and Vg22 represent gate signals of the switching elements Q11, Q12, Q21, and Q22, respectively. High represents an ON state of the switching element, and Low represents an OFF state. I1 represents a current flowing through the inductor L1, and a direction in which the load current flows to the load 3 is positive. I11 and 121 represent currents flowing through the inductors L11 and L21, respectively, and directions in which the currents are output from the power conversion units 10 and 20 are positive. Tp represents a time (delay time) from when one of the switching element Q11 and the switching element Q21 or one of the switching element Q12 and the switching element Q22 is turned on until the other is turned on. A period of each of the modes A1 to A12 corresponds to each mode described with reference to FIGS. 3 to 5.

(A1) to (A4) of FIG. 3, (A5) to (A8) of FIG. 4, and (A9) to (A 12) of FIG. 5 illustrate circuit operations in modes A1 to A12 illustrated in FIG. 2, respectively. In FIGS. 3 to 5, only one phase of the bus is illustrated and the other phases (switching elements Q13 to Q16 of the power conversion unit 10 and switching elements Q23 to Q26 of the power conversion unit 20) are omitted in order to prevent the drawing from being complicated. Hereinafter, the circuit operation in each of the modes A1 to A12 will be described. In the present specification, it is assumed that the inductances of the inductor L1 and the load 3 are sufficiently large and the current I1 of the inductor L1 can be regarded as being constant. The voltages applied to the capacitor C1 and the capacitor C2 are equal to the voltage of the DC power supply 2, and this voltage is referred to as a "DC link voltage".

### (Mode A1)

In the power conversion unit 10, the switching element Q11 is in the off state, the switching element Q12 is in the on state, and the current of the inductor L11 flows through the diode D12. In the power conversion unit 20, the switching element Q21 is in the off state, the switching element Q22 is in the on state, and the current of the inductor L21 flows through the diode D22. As illustrated in FIG. 2, in this mode, the current I11 of the inductor L11 is smaller than the current I21 of the inductor L21, and the sum of the current I11 and the current I21 is the current I1 of the inductor L1.

### (Mode A2)

When the switching elements Q12 and Q22 are turned off, a state of the mode A2 is obtained. Since no current flows through the switching elements Q12 and Q22, the current path is similar to that in the mode A1.

### (Mode A3)

When switching element Q11 is turned on, a state of the mode A3 is obtained. The current of the inductor L11 flowing through the diode D12 flows through the switching element Q11. The switching current flowing at the time of switching of the switching element Q11 at this time is the current I11 of the inductor L11. As illustrated in FIG. 2, since the current I11 of the inductor L11 is smaller than the current I21 of the inductor L21, the switching element Q11 is turned on with a current smaller than half of the current I1 of the inductor L1. A DC link voltage is applied to the inductor L11 and the inductor L21, the current I11 of the inductor L11 increases, and the current I21 of the inductor L21 decreases. Then, the magnitude relationship between these currents I11 and 121 is reversed, and the current I21 becomes smaller than the current I11.

### (Mode A4)

When the switching element Q21 is turned on after delay time Tp from the turn-on of the switching element Q11, a state of the mode A4 is obtained. The current of the inductor L21 flowing through the diode D22 flows through the switching element Q21. Since the switching current at this time is the current I21 of the inductor L21 and is smaller than the current I11 of the inductor L11 as illustrated in FIG. 2, the switching element Q21 is turned on with a current smaller than half of the current I1 of the inductor L1. The DC link voltage is not applied to the inductor L11 and the inductor L21, and the current I11 and the current I21 are maintained. At this time, the difference between the current I11 and the current I21 may gradually decrease due to the voltage drop on the current path.

### (Mode A5)

When the switching elements Q11 and Q21 are turned off, a state of the mode A5 is obtained. The current of the inductor L11 flowing through the switching element Q11 is commutated to the diode D12, and the current of the inductor L21 flowing through the switching element Q21 is commutated to the diode D22. Subsequently, the currents I11 and I21 of the inductors L11 and L21 are maintained.

### (Mode A6)

When the switching element Q12 is turned on, a state of the mode A6 is obtained. Since the current of the inductor L11 flows through the diode D12, the current path is similar to that of the mode A5.

### (Mode A7)

When the switching element Q22 is turned on, a state of the mode A7 is obtained. Since the current of the inductor L21 flows through the diode D22, the current path is similar to that of the mode A6.

### (Mode A8)

When the switching elements Q12 and Q22 are turned off, a state of the mode A8 is obtained. Since no current flows through the switching elements Q12 and Q22, the current path is similar to that in the mode A7.

### (Mode A9)

When the switching element Q21 is turned on, a state of the mode A9 is obtained. The current of the inductor L21 flowing through the diode D22 flows through the switching element Q21. Since the switching current at this time is the current I21 of the inductor L21 and is smaller than the current I11 of the inductor L11 as illustrated in FIG. 2, the switching element Q21 is turned on with a current smaller than half of the current I1 of the inductor L1. A DC link voltage is applied to the inductor L21 and the inductor L11, the current I21 of the inductor L21 increases, and the current I11 of the inductor L11 decreases. Then, the magnitude relationship between these currents I21 and I11 is reversed, and the current I11 becomes smaller than the current I21.

### (Mode A10)

When the switching element Q11 is turned on after the delay time Tp from the turn-on of the switching element Q21, a state of the mode A10 is obtained. The current of the inductor L11 flowing through the diode D12 flows through the switching element Q11. Since the switching current at this time is the current I11 of the inductor L11 and is smaller than the current I21 of the inductor L21 as illustrated in FIG. 2, the switching element Q11 is turned on with a current smaller than half of the current I1 of the inductor L1. The DC link voltage is not applied to the inductor L21 and the inductor L11, and the current I21 and the current I11 are maintained. At this time, the difference between the current I21 and the current I11 may gradually decrease due to the voltage drop on the current path.

### (Mode A11)

When the switching elements Q11 and Q21 are turned off, a state of the mode A11 is obtained. The current of the inductor L11 flowing through the switching element Q11 is commutated to the diode D12, and the current of the inductor L21 flowing through the switching element Q21 is commutated to the diode D22. Subsequently, the currents I11 and I21 of the inductors L11 and L21 are maintained.

### (Mode A12)

When the switching element Q22 is turned on, a state of the mode A12 is obtained. Since the current of the inductor L21 flows through the diode D22, the current path is similar to that of the mode A11.

Thereafter, when the switching element Q12 is turned on, the state returns to the mode A1. Since the current of the inductor L11 flows through the diode D12, the current path is similar to that of the mode A12. Thereafter, these modes A1 to A12 are repeated.

As described above, by providing the delay time Tp between the turn-on timing of the switching element Q11 and the turn-on timing of the switching element Q21, both the switching current when the switching element Q11 is turned on and the switching current when the switching element Q21 is turned on can be set to a value smaller than half of the current of the inductor L1. Therefore, the sum of the switching currents of the switching element Q11 and the switching element Q21 at the time of turn-on can be made smaller than the current of the inductor L1, that is, the load current.

As a result, it is possible to reduce the switching loss at the time of turn-on of both the switching element Q11 and the switching element Q21.

Since no delay time is provided for the turn-off timing, the sum of the switching currents at the turn-off time of the switching element Q11 and the switching element Q21 is equal to the current of the inductor L1, that is, the load current.

### [Another Operation Example of Power Conversion Device]

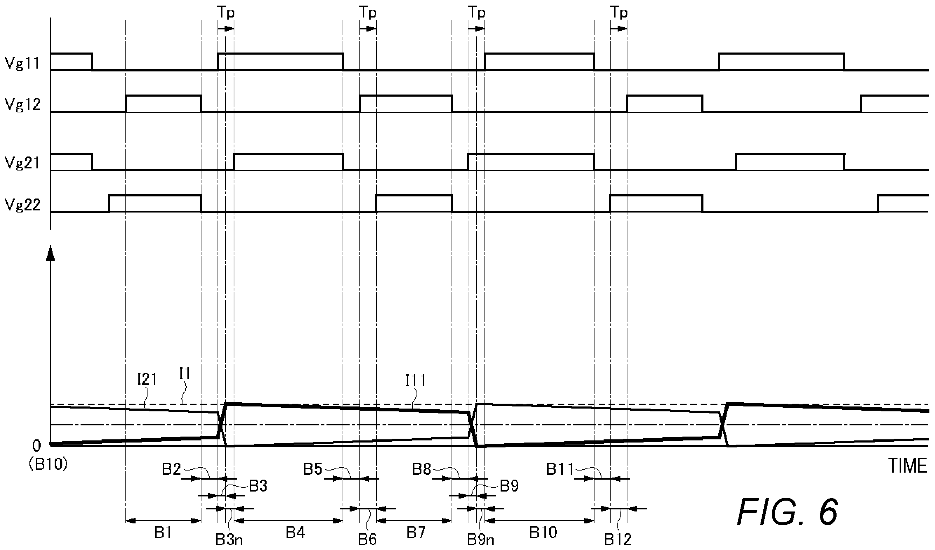

Next, the operation of the power conversion device 1 under the condition that the load current is relatively small such that the current of the inductor L11 or L21 becomes zero in the process of the switching operation will be described with reference to FIGS. 6 and 7 to 10.

FIG. 6 is a waveform chart illustrating another operation example of the power conversion device 1.

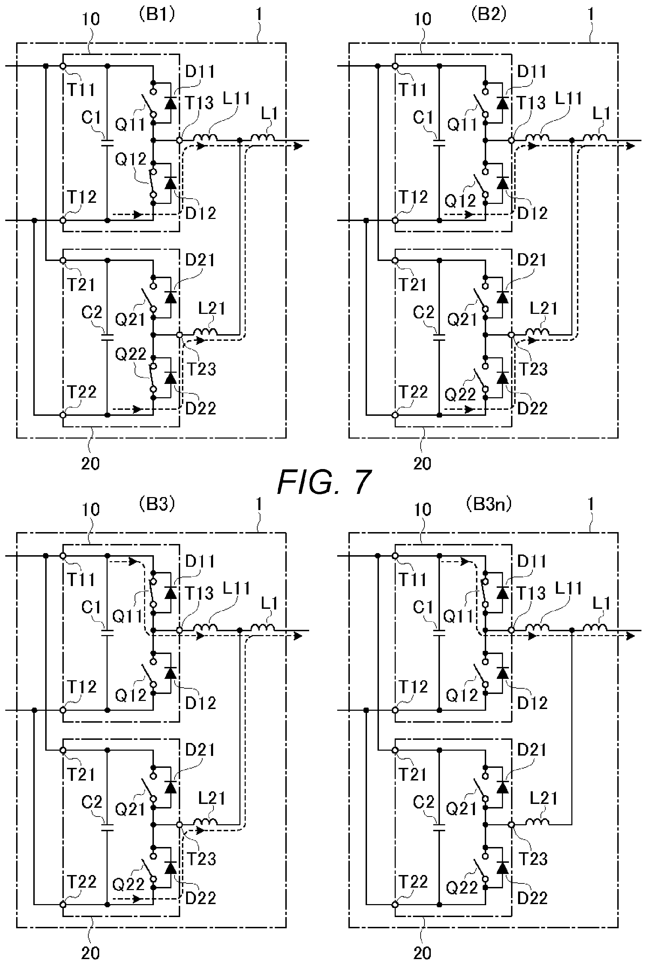

FIG. 7 is a circuit diagram illustrating another operation example (modes B1 to B3n) of the power conversion device 1.

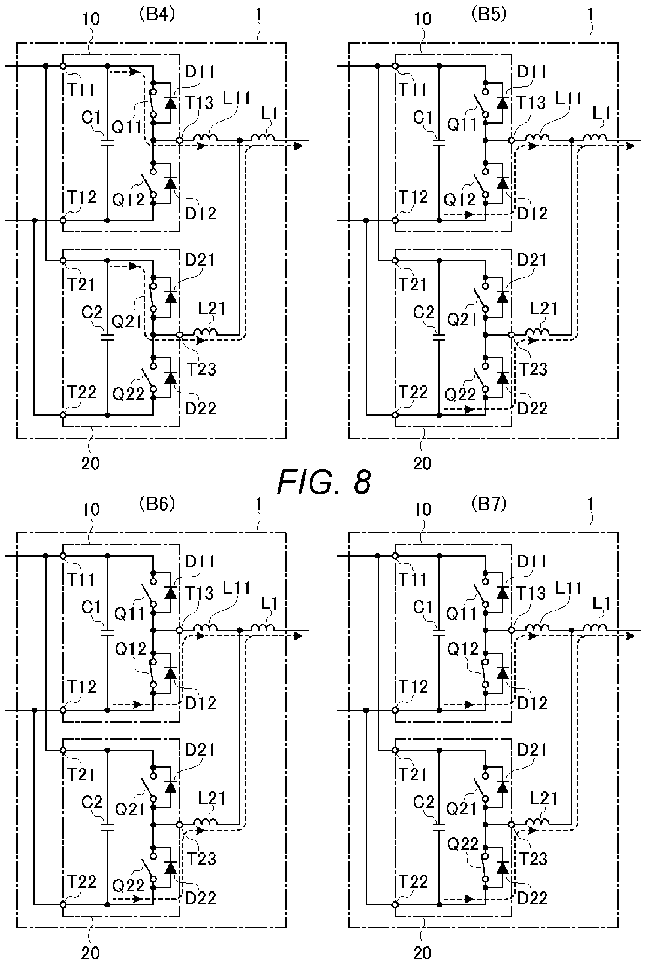

FIG. 8 is a circuit diagram illustrating another operation example (modes B4 to B7) of the power conversion device 1.

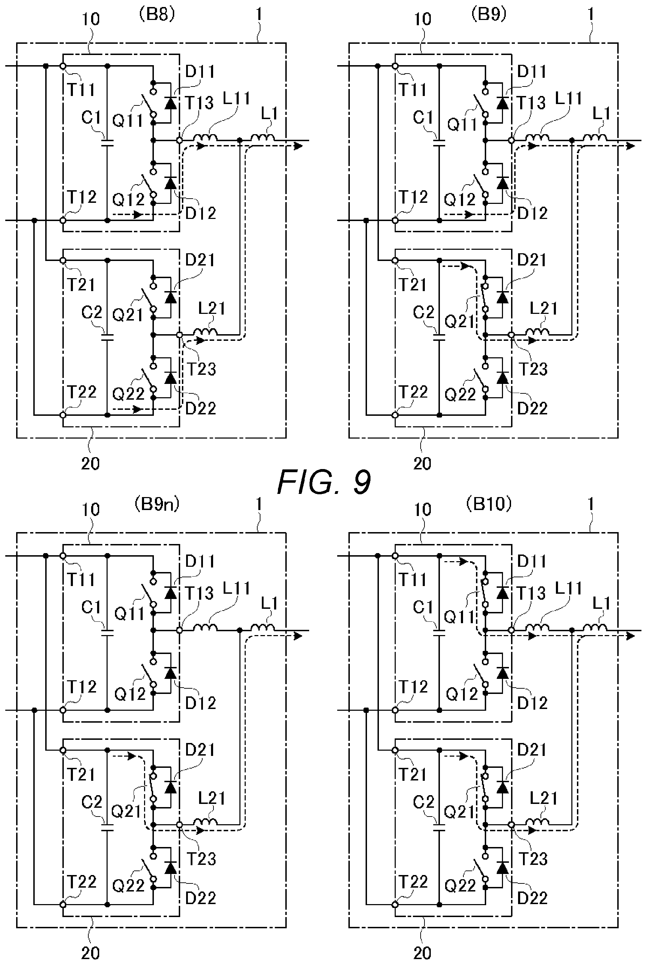

FIG. 9 is a circuit diagram illustrating another operation example (modes B8 to B10) of the power conversion device 1.

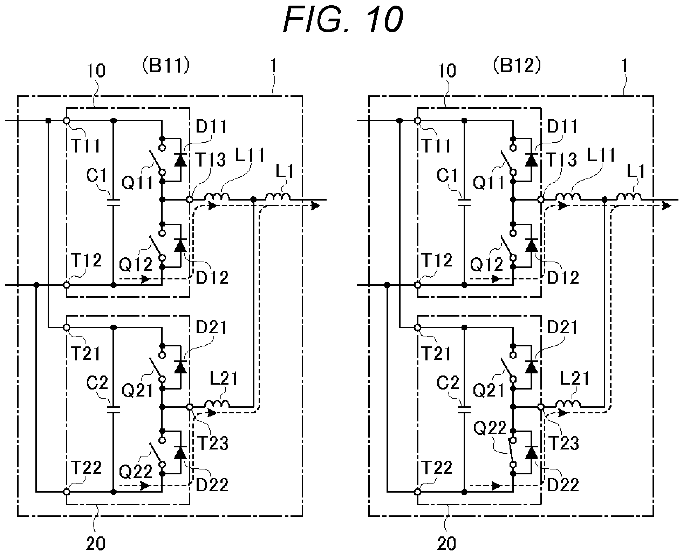

FIG. 10 is a circuit diagram illustrating another operation example (modes B11 to B12) of the power conversion device 1.

In FIG. 6, the horizontal axis represents time, and the vertical axis represents the voltage or current state of each unit of the power conversion device 1. The meaning of each symbol is the same as that in FIG. 2. A period of each of the modes B1 to B12, B3n, and B9n corresponds to each mode described with reference to FIGS. 7 to 10.

(B1) to (B3n) of FIG. 7, (B4) to (B7) of FIG. 8, (B8) to (B10) of FIG. 9, and (B11) to (B12) of FIG. 10 illustrate circuit operations in modes B1 to B12, B3n, and B9n illustrated in FIG. 6, respectively. Note that the notation method of the drawings is similar to that of FIGS. 3 to 5.

### (Mode B1)

The state of the switching elements Q11 and Q12 of the power conversion unit 10, the state of the switching elements Q21 and Q22 of the power conversion unit 20, the current path, and the current I11 of the inductor L11 are smaller than the current I21 of the inductor L21, which is similar to the mode A1 of FIG. 3.

### (Mode B2)

When the switching elements Q12 and Q22 are turned off, a state of the mode B2 is obtained. Since no current flows through these switching elements Q12 and Q22, the current path is similar to that in the mode B1.

### (Mode B3)

When the switching element Q11 is turned on, a state of the mode B3 is obtained. The current of the inductor L11 flowing through the diode D12 flows through the switching element Q11. Since the switching current at this time is the current I11 of the inductor L11 and is smaller than the current I21 of the inductor L21 as illustrated in FIG. 6, the switching element Q11 is turned on with a current smaller than half of the current I1 of the inductor L1. A DC link voltage is applied to the inductor L11 and the inductor L21, the current I11 of the inductor L11 increases, and the current I21 of the inductor L21 decreases. Then, the magnitude relationship between these currents I11 and I21 is reversed, and the current I21 becomes smaller than the current I11.

### (Mode B3n)

When the current I21 of the inductor L21 decreases and reaches zero, a state of the mode B3n is obtained.

Since the switching element Q22 is in the off state, the current of the inductor L21 does not flow in the reverse direction, and the current I21 of the inductor L21 maintains zero. Therefore, a state in which the current I11 of the inductor L11 is equal to the current I1 of the inductor L1 is maintained.

### (Mode B4)

When the switching element Q21 is turned on after the delay time Tp from the turn-on of the switching element Q11, a state of the mode B4 is obtained. In the mode B3n, since the current I21 of the inductor L21 is zero, the switching element Q21 is turned on with a zero current.

Thereafter, due to a voltage drop on the path of the current flowing through the inductor L11, the current may gradually start flowing through the inductor L21.

### (Mode B5)

When the switching elements Q11 and Q21 are turned off, a state of the mode B5 is obtained. The current of the inductor L11 flowing through the switching element Q11 is commutated to the diode D12, and the current of the inductor L21 flowing through the switching element Q21 is commutated to the diode D22. Subsequently, the currents I11 and I21 of the inductors L11 and L21 are maintained.

### (Mode B6)

When the switching element Q12 is turned on, a state of the mode B6 is obtained. Since the current of the inductor L11 flows through the diode D12, the current path is similar to that in the mode B5.

### (Mode B7)

When the switching element Q22 is turned on, a state of the mode B7 is obtained. Since the current of the inductor L21 flows through the diode D22, the current path is similar to that in the mode B6.

### (Mode B8)

When the switching elements Q12 and Q22 are turned off, a state of the mode B8 is obtained. Since no current flows through these switching elements Q12 and Q22, the current path is similar to that in the mode B7.

### (Mode B9)

When the switching element Q21 is turned on, a state of the mode B9 is obtained. The current of the inductor L21 flowing through the diode D22 flows through the switching element Q21. Since the switching current at this time is the current I21 of the inductor L21 and is smaller than the current I11 of the inductor L11 as illustrated in FIG. 6, the switching element Q21 is turned on with a current smaller than half of the current I1 of the inductor L1. A DC link voltage is applied to the inductor L21 and the inductor L11, the current I21 of the inductor L21 increases, and the current I11 of the inductor L11 decreases. Then, the magnitude relationship between these currents I21 and I11 is reversed, and the current I11 becomes smaller than the current I21.

### (Mode B9n)

When the current I11 of the inductor L11 decreases and reaches zero, a state of the mode B9n is obtained.

Since the switching element Q12 is in the off state, the current of the inductor L11 does not flow in the reverse direction, and the current I11 of the inductor L11 maintains zero. Therefore, a state in which the current I21 of the inductor L21 is equal to the current I1 of the inductor L1 is maintained.

### (Mode B10)

When the switching element Q11 is turned on after the delay time Tp from the turn-on of the switching element Q21, a state of the mode B10 is obtained. In the mode B9n, since the current I11 of the inductor L11 is zero, the switching element Q11 is turned on with a zero current. Thereafter, due to a voltage drop on the path of the current flowing through the inductor L21, the current may gradually start flowing through the inductor L11.

### (Mode B11)

When the switching elements Q11 and Q21 are turned off, a state of the mode B11 is obtained. The current of the inductor L11 flowing through the switching element Q11 is commutated to the diode D12, and the current of the inductor L21 flowing through the switching element Q21 is commutated to the diode D22. Subsequently, the currents I11 and I21 of the inductors L11 and L21 are maintained.

### (Mode B12)

When the switching element Q22 is turned on, a state of the mode B12 is obtained. Since the current of the inductor L21 flows through the diode D22, the current path is similar to that in the mode B11.

Thereafter, when the switching element Q12 is turned on, the state returns to the mode B1. Since the current of the inductor L11 flows through the diode D12, the current path is similar to that in the mode B12. Thereafter, these modes B1 to B12 are repeated.

As described above, by providing the delay time Tp between the turn-on timing of the switching element Q11 and the turn-on timing of the switching element Q21, even when the load current is relatively small, the same effects as those in the case illustrated in FIGS. 2 to 6 can be obtained. That is, even when the load current is relatively small, both the switching current when the switching element Q11 is turned on and the switching current when the switching element Q21 is turned on can be set to a value smaller than half of the current of the inductor L1.

In particular, when the load current is relatively small, one switching element can be turned on with a zero current. Therefore, the sum of the switching currents of the switching element Q11 and the switching element Q21 at the time of turn-on can be made smaller than the current of the inductor L1, that is, the load current. As a result, it is possible to reduce the switching loss at the time of turn-on of both the switching element Q11 and the switching element Q21.

In other words, the power conversion device 1 according to the present embodiment shifts the turn-on timings of the switching elements included in the power conversion units 10 and 20 connected in parallel between the power conversion units 10 and 20. By shifting the turn-on timings of the switching elements between the power conversion units 10 and 20, the switching currents of the switching element are intentionally unbalanced. At this time, by unbalancing the switching currents of the switching elements at an appropriate timing, switching losses of the switching elements included in the power conversion units 10 and 20 can be reduced.

### [Method for Determining Delay Time]

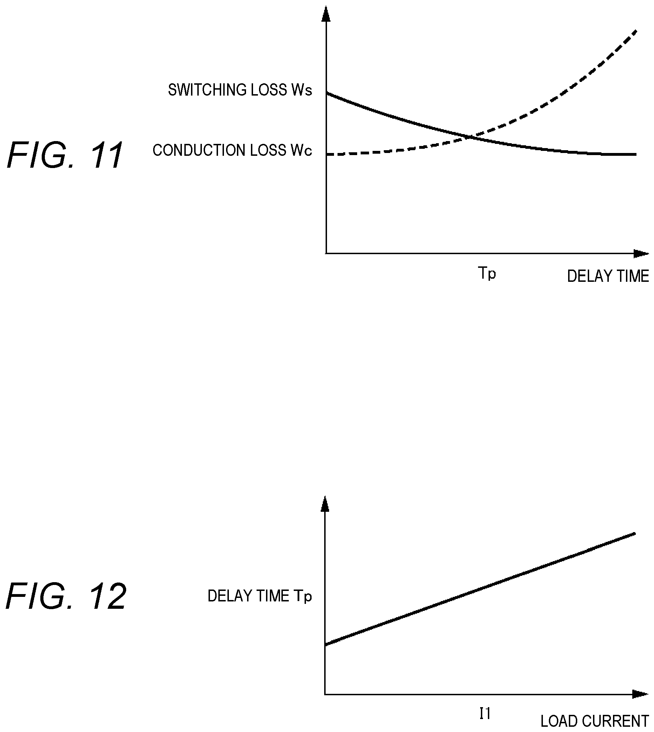

Next, how to determine the delay time Tp will be described with reference to FIGS. 11 and 12.

FIG. 11 illustrates how the switching loss Ws and the conduction loss Wc change when the delay time Tp is changed.

FIG. 12 illustrates how the delay time Tp is changed with respect to a change in the current I1 flowing through the inductor L1.

As described above, the switching loss Ws is reduced by providing the delay time Tp of the turn-on timing of the switching elements included in the power conversion units 10 and 20. On the other hand, the current of each of the power conversion units 10 and 20 repeats increase and decrease for each switching cycle. Therefore, as illustrated in FIG. 11, when the delay time Tp is increased, the switching loss Ws is reduced, but the effective value of the current flowing through each of the power conversion units 10 and 20 is increased, and the conduction loss Wc is increased. Therefore, the delay time Tp may be determined so that the total value of the switching loss Ws and the conduction loss Wc becomes small.

Here, the effective value of the current is obtained by a square root of an average value obtained by squaring each part (instantaneous value) of the current waveform illustrated in FIG. 2. Therefore, when the increase/decrease change width of the current in each switching cycle due to the delay time Tp is equal, the increase in the effective current value decreases as the load current, that is, the current I1 of the inductor L1 increases and the average current of the power conversion units 10 and 20 increases. In other words, in a case where the increase in the effective current value is suppressed within a certain range, the delay time Tp can be increased to increase the reduction in the switching loss as the load current increases. Therefore, as illustrated in FIG. 12, the delay time Tp of the turn-on timing of the switching elements included in the power conversion units 10 and 20 may be increased as the load current, that is, the current I1 of the inductor L1 increases. FIG. 12 illustrates an example in which the relationship between the load current and the delay time Tp is approximately linear.

Note that, from the viewpoint of loss reduction, it is desirable to maintain the average current of the power conversion unit 10 and the average current of the power conversion unit 20 at the same level by balancing (balancing or harmonizing) them. For this purpose, the control unit 4 controls the turn-on and turn-off timings of the switching elements so as to balance the average currents of the power conversion units 20 and 30. For example, the current of the inductor L11 is detected as the current of the power conversion unit 10, and the current of the inductor L21 is detected as the current of the power conversion unit 20, and the power conversion unit having a smaller current may be configured to shorten the period during which the switching element is in the on state by shortening the delay time Tp at the time of turn-on.

In general, the average currents of the power conversion units 20 and 30 naturally balance over time due to voltage drop on the current path, etc., but may not naturally balance. As described above, the control unit 4 performs control to balance the average currents of the power conversion units 20 and 30, so that it is possible to actively balance the average currents of the power conversion units 20 and 30 when the average currents do not naturally balance.

In the above description, the operations of the switching elements Q11 and Q12 of the power conversion unit 10 and the switching elements Q21 and Q22 of the power conversion unit 20 have been described. However, the other switching elements Q13 to Q16 of the power conversion unit 10 and the other switching elements Q23 to Q26 of the power conversion unit 20 may be similarly controlled. In addition, although the case where the polarity of the current of the inductor L1 is positive has been described, the same control may be performed for the negative case.

The method for determining the delay time Tp can also be applied to the power conversion devices of the second to fourth embodiments described later. Similarly, the technical idea of balancing the average currents of the plurality of power conversion units connected in parallel can also be applied to the power conversion devices of the second to fourth embodiments described later.

In the first embodiment, an example in which the power conversion device of the present invention is applied to a three-phase inverter has been described, but it is a matter of course that the power conversion device of the present invention can also be applied to a three-phase converter.

As described above, the power conversion device (for example, the power conversion device 1) according to the first embodiment includes the plurality of power conversion units (the power conversion units 10 and 20) connected in parallel via the inductance components (for example, inductors L11 to L13, L11 to L13, or wiring), and the control unit (the control unit 4) that changes the turn-on and turn-off timings of the switching elements (the switching element Q11 to 16, Q21 to 26) included in each of the plurality of power conversion units. The control unit is configured to alternately and repeatedly delay the turn-on timing of the switching elements (switching elements Q11 to 16) included in the first power conversion unit (power conversion unit 10) and the turn-on timing of the switching elements (switching elements Q21 to 26) included in the second power conversion unit (power conversion unit 10).

In the power conversion device having the above configuration according to the first embodiment, a delay time (Tp) is provided between the turn-on timing of the switching elements included in the first power conversion unit and the turn-on timing of the switching elements included in the second power conversion unit to alternately delay the turn-on timing. As a result, the total switching current at the time of turn-on can be reduced without increasing the total switching current at the time of turn-off, and the switching loss of the power conversion device can be reduced. That is, the power conversion device according to the present embodiment can reduce switching loss and obtain high efficiency in a configuration including a plurality of (two in FIG. 1) power conversion units connected in parallel.

### [Modified Example]

Incidentally, the delay time Tp of the turn-on timing of the switching elements included in the power conversion units 20 and 30 of the power conversion device 1 described above is relative. Therefore, in a state where the turn-on timing of the switching elements included in one power conversion unit is fixed, the turn-on timing of the switching elements included in the other power conversion unit may be alternately delayed/advanced. With this configuration, it is possible to obtain an effect similar to that in a case where the power conversion device 1 performs the operation illustrated in FIGS. 2 and 6.

### <Second embodiment>

The second embodiment is an example in which the power conversion device 1 according to the first embodiment includes an inductor in a power conversion unit.

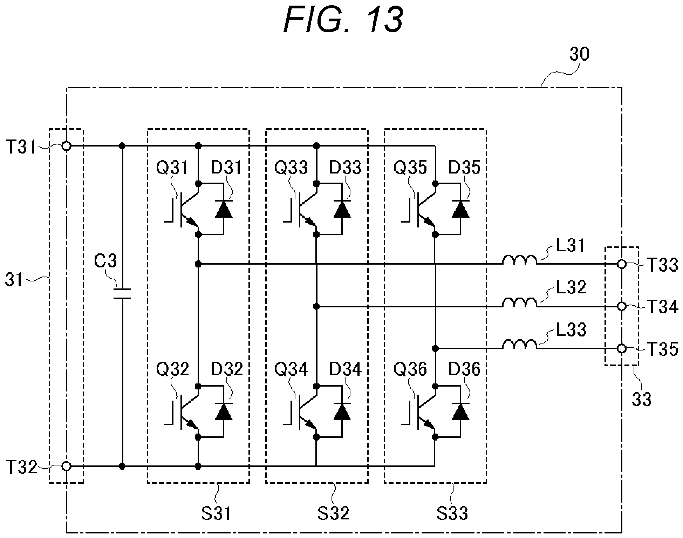

FIG. 13 is a circuit configuration diagram illustrating an example of a power conversion unit according to the second embodiment. An illustrated power conversion unit 30 includes a capacitor C3, a switching leg S31 (an example of a first switching leg), a switching leg S32 (an example of a second switching leg), a switching leg S33 (an example of a third switching leg), and terminals T31 to T35. The switching leg S31 includes a switching element Q31 and a switching element Q32 connected in series. The switching leg S32 includes a switching element Q33 and a switching element Q34 connected in series. The switching leg S33 includes a switching element Q35 and a switching element Q36 connected in series. The capacitor C3, the switching leg S31, the switching leg S32, and the switching leg S33 are connected in parallel.

One end of the capacitor C3 is connected to the terminal T31, and the other end of the capacitor C3 is connected to the terminal T32. In addition, the terminal T33 is connected to a connection point between the switching element Q31 and the switching element Q32 via an inductor L31. Similarly, the terminal T34 is connected to a connection point between the switching element Q33 and the switching element Q34 via an inductor L32, and the terminal T35 is connected to a connection point between the switching element Q35 and the switching element Q36 via an inductor L33. The terminals T31 and T32 are set as an input/output terminal 31, and the terminals T33 to T35 are set as an input/output terminal 33. Diodes D31 to D36 are connected in anti-parallel to the switching elements Q31 to Q36, respectively.

As described above, the power conversion unit 30 includes the inductors L31 to L33 for each phase in its own unit as compared with the power conversion units 10 and 20. The inductors L31 to L33 may be connected not to the load 3 side but to the DC power supply 2 side. In this case, by connecting an inductor to the terminal T31 and/or the terminal T32, resonance of a circuit having a capacitor can be prevented. That is, the power conversion unit 30 may include, as a main component of the inductance component, an inductor connected to the first input/output terminal (input/output terminal 31) and/or inductors (inductors L31 to L33) connected to the second input/output terminal (input/output terminal 33).

In the power conversion device 1, by using the power conversion unit 30 instead of the power conversion units 10 and 20, the inductors L11 to L13 and L21 to L23 outside the power conversion unit can be omitted. As a result, when the power conversion units 10 and 20 and the like are incorporated in the power conversion device 1, it is possible to save time and effort for attaching the inductors L11 to L13 and L21 to L23 and wiring processing. Therefore, it is possible to shorten the working time and maintain constant quality of the power conversion device 1.

### <Third embodiment>

The third embodiment is an example in which the number of components of the circuit is reduced and a single-phase power conversion device is realized as compared with the power conversion device 1 according to the first embodiment.

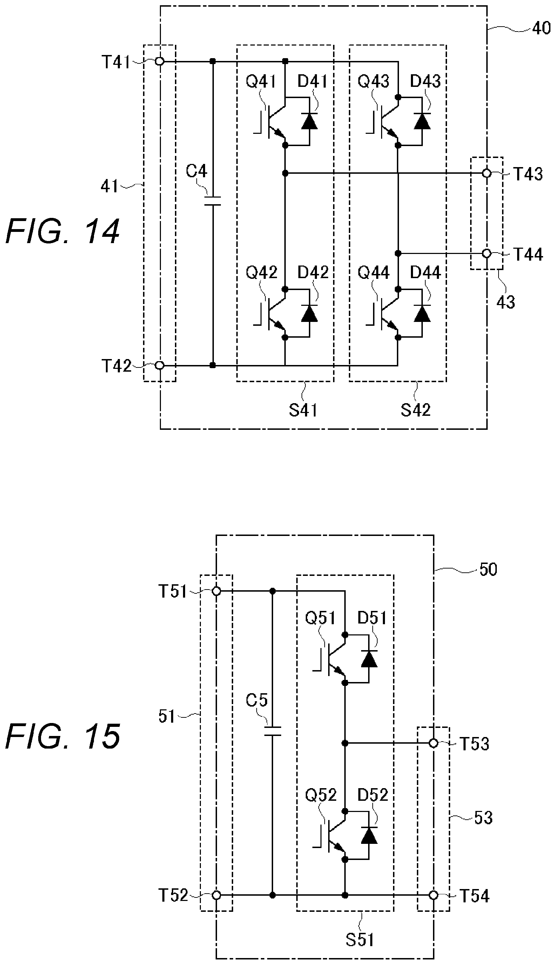

FIG. 14 is a circuit configuration diagram illustrating an example of a power conversion unit according to the third embodiment. An illustrated power conversion unit 40 includes a capacitor C4, a switching leg S41 (an example of a first switching leg), a switching leg S42 (an example of a second switching leg), and terminals T41 to T44. The switching leg S41 includes a switching element Q41 and a switching element Q42 connected in series. The switching leg S42 includes a switching element Q43 and a switching element Q44 connected in series. The capacitor C4, the switching leg S41, and the switching leg S42 are connected in parallel.

One end of the capacitor C4 is connected to a terminal T41, and the other end of the capacitor C4 is connected to a terminal T42. In addition, a terminal T43 is connected to a connection point between the switching element Q41 and the switching element Q42, and a terminal T44 is connected to a connection point between the switching element Q43 and the switching element Q44. The terminals T41 and T42 are set as an input/output terminal 41, and the terminals T43 and 44 are set as an input/output terminal 43. Diodes D41 to D44 are connected in anti-parallel to the switching elements Q41 to Q44, respectively.

As described above, the power conversion unit 40 includes the two switching legs S41 and S42, and the number of switching elements and switching legs is reduced as compared with the power conversion units 10, 20, and 30. In the power conversion device 1, by using the power conversion unit 40 instead of the power conversion units 10 and 20, it is possible to realize a single-phase inverter or a single-phase converter while reducing the number of components.

### <Fourth embodiment>

The fourth embodiment is an example in which the number of components of the circuit is reduced and a power conversion device for boosting or stepping down is realized as compared with the power conversion device 1 according to the first embodiment.

FIG. 15 is a circuit configuration diagram illustrating an example of a power conversion unit according to the fourth embodiment. An illustrated power conversion unit 50 includes a capacitor C5, a switching leg S51 in which a switching element Q51 and a switching element Q52 are connected in series, and terminals T51 to T54. The capacitor C5 and the switching leg S51 are connected in parallel.

One end of the capacitor C5 is connected to the terminal T51, and the other end of the capacitor C5 is connected to the terminal T52. In addition, the terminal T53 is connected to a connection point between the switching element Q51 and the switching element Q52, and the terminal T54 is connected to the other end of both ends of the capacitor C5.

The terminals T51 and T52 are set as an input/output terminal 51, and the terminals T53 and 54 are set as an input/output terminal 53. Diodes D51 and D52 are connected in anti-parallel to the switching elements Q51 and 52, respectively.

As described above, the power conversion unit 50 includes the switching leg S51 and reduces the number of switching elements and switching legs as compared with the power conversion units 10, 20, 30, and 40. In the power conversion device 1, by using the power conversion unit 50 instead of the power conversion units 10 and 20, it is possible to realize a step-up converter and a step-down converter while reducing the number of components.

Although the configuration of the power conversion device in which two power conversion units are connected in parallel has been described in the present specification, the number of power conversion units connected in parallel may be three or more. In that case, as an example, the control unit 4 may divide the power conversion units connected in parallel into two groups, and may alternately and repeatedly delay the turn-on timing of the switching elements included in the power conversion unit of one group and the turn-on timing of the switching elements included in the power conversion unit of the other group.

Alternatively, the turn-on timings of the switching elements included in each power conversion unit may be sequentially and repeatedly delayed. For example, when there are three power conversion units, the control unit 4 sequentially and repeatedly delays the turn-on timing of the switching elements included in the first power conversion unit, the turn-on timing of the switching elements included in the second power conversion unit, and the turn-on timing of the switching elements included in the third power conversion unit.

In addition, for example, in a case where the number of parallel power conversion units is three or more, the control unit 4 sequentially and repeatedly delays the turn-on timing of the switching elements included in some power conversion units, the turn-on timing of the switching elements included in some other power conversion units, and the turn-on timing of the switching elements included in still some other power conversion units.

As described above, when the number of parallel power conversion units is three or an odd number of three or more, the turn-on timings of the switching elements included in the power conversion units are delayed one by one or for each group. As a result, even in a case where the number of power conversion units is an odd number, the same effect of reducing the switching loss can be obtained.

As described above, by applying the present invention, it is possible to realize a power conversion device such as a three-phase inverter, a three-phase converter, a single-phase inverter, a single-phase converter, a step-up converter, a step-down converter, and the like that reduce switching loss and improve efficiency.

Note that the present invention is not limited to the above-described embodiments, and it goes without saying that various other application examples and modifications can be taken without departing from the gist of the present invention described in the claims. For example, the above-described embodiments describe the configuration of the power conversion device in detail and specifically in order to describe the present invention in an easy-to-understand manner, and are not necessarily limited to those including all the components described above. In addition, it is also possible to add, replace, or delete other components for a part of the configuration of each embodiment.

In addition, some or all of the above-described configurations, functions, processing units, and the like may be implemented by hardware, for example, by designing with an integrated circuit. A processor device in a broad sense such as a field programmable gate array (FPGA) or an application specific integrated circuit (ASIC) may be used as the hardware.

In addition, in the above-described embodiments, control lines and information lines considered to be necessary for description are illustrated, and not all control lines and information lines are necessarily illustrated in terms of products. In practice, almost all components may be considered to be mutually connected.

### Reference Signs List

1 power conversion device
10, 20, 30, 40, 50 power conversion unit
2 DC power supply
3 load
4 control unit
5 to 7 current sensor
11, 21, 31, 41, 51 input/output terminal (first input/output terminal)
13, 23, 33, 43, 53 input/output terminal (second input/output terminal)
T11 to T15, T21 to T25, T31 to T35, T41 to T44, T51 to T54 terminal
C1 to C5 capacitor
L1 to L3, L11 to L13, L21 to L23, L31 to L33 inductor
S11 to S13, S21 to S23, S31 to S33, S41 to S42, S51 switching leg
Q11 to Q16, Q21 to Q26, Q31 to Q36, Q41 to Q44, Q51 to Q52 switching element
D11 to Q16, D21 to Q26, D31 to D36, D41 to D44, D51 to D52 diode

## Claims

1. A power conversion device comprising: a plurality of power conversion units connected in parallel via an inductance component; and a control unit that changes turn-on and turn-off timings of switching elements included in each of the plurality of power conversion units to control an output, wherein
the control unit alternately and repeatedly delays a turn-on timing of a switching element included in a first power conversion unit and a turn-on timing of a switching element included in a second power conversion unit.

2. The power conversion device according to claim 1, wherein
each of the power conversion units includes a first input/output terminal and a second input/output terminal, and
the first input/output terminals of the respective power conversion units are connected to each other and the second input/output terminals of the respective power conversion units are connected to each other.

3. The power conversion device according to claim 1, wherein the control unit increases a time for delaying the turn-on timing of the switching elements included in the first power conversion unit and the second power conversion unit in accordance with an increase in load current.

4. The power conversion device according to claim 2, wherein
the power conversion unit includes:
a capacitor and a first switching leg including a first switching element and a second switching element connected in series, and
the capacitor and the first switching leg are connected in parallel, the first input/output terminal is connected to both ends of the capacitor, and a connection point between the first switching element and the second switching element and one end of the capacitor are connected to the second input/output terminal.

5. The power conversion device according to claim 2, wherein
the power conversion unit includes:
a capacitor; a first switching leg including a first switching element and a second switching element connected in series; and
a second switching leg including a third switching element and a fourth switching element connected in series, and
the capacitor, the first switching leg, and the second switching leg are connected in parallel, both ends of the capacitor are connected to the first input/output terminal, and a connection point between the first switching element and the second switching element and a connection point between the third switching element and the fourth switching element are connected to the second input/output terminal.

6. The power conversion device according to claim 2, wherein
the power conversion unit includes:
a capacitor; a first switching leg including a first switching element and a second switching element connected in series;
a second switching leg including a third switching element and a fourth switching element connected in series; and
a third switching leg including a fifth switching element and a sixth switching element connected in series, and
the capacitor, the first switching leg, the second switching leg, and the third switching leg are connected in parallel, both ends of the capacitor are connected to the first input/output terminal, and a connection point between the first switching element and the second switching element, a connection point between the third switching element and the fourth switching element, and a connection point between the fifth switching element and the sixth switching element are connected to the second input/output terminal.

7. The power conversion device according to any one of claims 4 to 6, wherein each of the power conversion units includes an inductor connected to the first input/output terminal and/or the second input/output terminal as a main component of the inductance component.

8. The power conversion device according to claim 1, wherein each of the power conversion units is connected in parallel via an inductor as a main component of the inductance component.

9. The power conversion device according to claim 1, wherein the control unit controls turn-on and turn-off timings of the switching elements so as to balance average currents of the power conversion units.

10. The power conversion device according to claim 1, wherein
three or more of the power conversion units are provided, and
the control unit divides the power conversion units connected in parallel into two groups, and alternately and repeatedly delays a turn-on timing of the switching elements included in the power conversion unit of one group and a turn-on timing of the switching elements included in the power conversion unit of the other group.

11. The power conversion device according to claim 1, wherein
three of the power conversion units are provided, and
the control unit sequentially and repeatedly delays a turn-on timing of the switching elements included in the first power conversion unit, a turn-on timing of the switching elements included in the second power conversion unit, and a turn-on timing of the switching elements included in a third power conversion unit.

12. The power conversion device according to claim 1, wherein
three or more of the power conversion units are provided, and
the control unit sequentially and repeatedly delays a turn-on timing of the switching elements included in some of the power conversion units, a turn-on timing of the switching elements included in some other of the power conversion units, and a turn-on timing of the switching elements included in still some other of the power conversion units.

13. A power conversion method by a power conversion device including a plurality of power conversion units connected in parallel via an inductance component, and a control unit that changes turn-on and turn-off timings of switching elements included in each of the plurality of power conversion units to control an output, the power conversion method comprising:
alternately and repeatedly delaying, by the control unit, a turn-on timing of the switching elements included in a first power conversion unit and a turn-on timing of the switching elements included in a second power conversion unit.
